(19) Europäisches Patentamt
European Patent Office
Office européen des brevets

(11) **EP 4 418 064 A1**

(12) **EUROPEAN PATENT APPLICATION**
published in accordance with Art. 153(4) EPC

(43) Date of publication:
**21.08.2024  Bulletin 2024/34**

(51) International Patent Classification (IPC):
**G05D 1/02** (2020.01)      **B60W 30/09** (2012.01)

(21) Application number: **22891911.4**

(52) Cooperative Patent Classification (CPC):
**B60W 30/09; G05D 1/02; G06F 18/22; G08G 1/01; G08G 1/065; G08G 1/0967; G08G 1/16**

(22) Date of filing: **04.11.2022**

(86) International application number:
**PCT/CN2022/129922**

(87) International publication number:
**WO 2023/083116 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **09.11.2021   CN 202111319474**

(71) Applicant: **Huawei Technologies Co., Ltd.**
**Shenzhen, Guangdong 518129 (CN)**

(72) Inventor: **GAO, Lutao**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **SAFETY FACTOR ACQUISITION METHOD AND RELATED APPARATUS**

(57)     A safety factor obtaining method and a related apparatus are provided. The method includes: obtaining an actual distance between a first device and a first obstacle in a first time period (S201); and determining a safety factor of the first device based on the actual distance in the first time period and a safety distance in the first time period, where the safety factor is obtained by using at least a first similarity between a first mapping relationship and a second mapping relationship, the first mapping relationship is a mapping relationship between the actual distance and time that are in the first time period, and the second mapping relationship is a mapping relationship between the safety distance and the time that are in the first time period (S202). According to the method, the safety factor of the first device may be obtained by obtaining the actual distance and the safety distance that are of the first device in the first time period, to obtain a safety score and evaluate safety of a safety distance design of the first device at a fine granularity.

```
┌─────────────────────────────────────────────────────────┐
│ S201: Obtain an actual distance between a first device  │
│ and a first obstacle in a first time period              │
└─────────────────────────────────────────────────────────┘
                           │
                           ▼
┌─────────────────────────────────────────────────────────┐
│ S202: Determine a safety factor of the first device      │
│ based on the actual distance in the first time period    │
│ and a safety distance in the first time period, where    │
│ the safety factor is obtained by using at least a first  │
│ similarity S1 between a first mapping relationship and a  │
│ second mapping relationship, the first mapping           │
│ relationship is a mapping relationship between the actual │
│ distance and time that are in the first time period, and │
│ the second mapping relationship is a mapping relationship │
│ between the safety distance and the time that are in the  │
│ first time period                                         │
└─────────────────────────────────────────────────────────┘
```

FIG. 2

## Description

This application claims priority to Chinese Patent Application No. 202111319474.9, filed with the China National Intellectual Property Administration on November 9, 2021 and entitled "SAFETY FACTOR OBTAINING METHOD AND RELATED APPARATUS", which is incorporated herein by reference in its entirety.

## TECHNICAL FIELD

This application relates to the field of vehicle technologies, and in particular, to a safety factor obtaining method and a related apparatus.

## BACKGROUND

A safety distance between a driving device and an obstacle is set in an intelligent assisted driving system of the driving device. When an actual distance between the driving device and the obstacle is less than the safety distance, the driving device needs to take a measure, for example, braking, to avoid or mitigate collision.

To ensure safety of the driving device, a safety test needs to be performed on the safety distance set in the intelligent assisted driving system of the driving device. Currently, in a safety test technology related to the safety distance, a large quantity of scenarios are preset, and the driving device is tested in each scenario. When the driving device travels in each test scenario, if the actual distance between the driving device and the obstacle at at least one moment cannot satisfy the safety distance, it is determined that the driving device is unsafe in the scenario; on the contrary, if the actual distance between the driving device and the obstacle at any moment can satisfy the safety distance, it is determined that the driving device is safe in the scenario.

However, in this test method, only scenarios in which the driving device is safe and scenarios in which the driving device is unsafe based on the safety distance can be measured, but a safety degree of the driving device based on the safety distance in these unsafe scenarios cannot be measured, or an advantage degree or a disadvantage degree of the safety distance of the driving device in these unsafe scenarios cannot be measured.

If the advantage degree or the disadvantage degree of the safety distance of the driving device in these unsafe scenarios can be learned, a safety distance that corresponds to a large quantity of safe scenarios and that is advantageous in the unsafe scenarios may be selected, so that safety of the driving device in these unsafe scenarios can be improved, thereby improving safety of the driving device.

Therefore, how to learn of safety of a safety distance of a tested driving device in an unsafe scenario has become an urgent technical problem to be resolved.

## SUMMARY

This application provides a safety factor obtaining method and a related apparatus, to evaluate safety degrees of different safety distance designs.

According to a first aspect, this application provides a safety factor obtaining method, where the method includes: obtaining an actual distance between a first device and a first obstacle in a first time period; and determining a safety factor of the first device based on the actual distance in the first time period and a safety distance in the first time period, where the safety distance in the first time period corresponds to a preset safety distance rule, the safety factor is obtained by using at least a first similarity $S_1$ between a first mapping relationship and a second mapping relationship, the first mapping relationship is a mapping relationship between the actual distance and time that are in the first time period, and the second mapping relationship is a mapping relationship between the safety distance and the time that are in the first time period.

In the method, the safety factor of the first device may be obtained by obtaining the actual distance and the safety distance that are of the first device in the first time period, to obtain a safety score and evaluate, at a fine granularity, whether safety of a safety distance design of the first device is good or bad.

With reference to the first aspect, in a possible implementation, the first similarity is obtained by using a first distance value $T1$ and a second distance value $T2$, the first distance value reflects a sum of a minimum value in an actual distance and a safety distance that correspond to at least one moment in the first time period, and the second distance value reflects a sum of the safety distance corresponding to the at least one moment in the first time period.

In this implementation, that the first similarity may be obtained by sampling actual distances and safety distances that are at some time points in the first time period is described, to provide a basis for obtaining the safety factor accurately.

With reference to the first aspect, in a possible implementation, the first distance value reflects a sum of a minimum value in an actual distance and a safety distance that correspond to any moment in the first time period, and the second distance value reflects a sum of the safety distance corresponding to the any moment in the first time period.

In this implementation, that the first similarity may also be obtained by sampling an actual distance and a safety distance that correspond to each moment in the first time period is described, to provide a basis for obtaining the safety factor accurately.

With reference to the first aspect, in a possible implementation, the first similarity, the first distance value, and the second distance value satisfy the following relational expression: $S1=T1/T2$.

In this implementation, the relationship satisfied by the first similarity, the first distance value, and the second distance value is specified.

With reference to the first aspect, in a possible implementation, the first similarity is a first distance ratio, and the first distance ratio reflects a ratio of a minimum value in an actual distance and a safety distance that correspond to a first moment in the first time period to the safety distance corresponding to the first moment.

In this implementation, another manner of obtaining the first similarity is described. The first similarity may be the ratio of the minimum value in the actual distance and the safety distance that correspond to the first moment in the first time period to the safety distance, and the ratio is used to reflect a similarity between the first mapping relationship and the second mapping relationship.

With reference to the first aspect, in a possible implementation, the first distance ratio is less than or equal to a ratio of a minimum value in an actual distance and a safety distance that correspond to any moment in the first time period to the corresponding safety distance.

In this implementation, the first similarity is limited as a minimum ratio of a minimum value in an actual distance and a safety distance that correspond to each moment in the first time period to the safety distance, which is a most serious case in which the safety distance is not satisfied in proportion. In this way, the obtained first similarity is more accurate.

With reference to the first aspect, in a possible implementation, the safety factor is obtained by using at least the first similarity and at least one of a collision factor or a safety time proportion factor, the collision factor indicates a case in which collision occurs in the first time period, the safety time proportion factor indicates a ratio of total duration of one or more sub-periods in which an actual distance is greater than a safety distance to duration of the first time period, and the first time period includes at least one sub-period.

In this implementation, that in addition to obtaining the safety factor by using the first similarity, at least one of the collision factor or the safety time proportion factor may be introduced to obtain an accurate safety factor through combination is described.

With reference to the first aspect, in a possible implementation, a value of the safety factor is equal to a product of the first similarity and the collision factor.

With reference to the first aspect, in a possible implementation, a value of the safety factor is equal to a product of the first similarity and the safety time proportion factor.

With reference to the first aspect, in a possible implementation, a value of the safety factor is equal to a product of the first similarity, the collision factor, and the safety time proportion factor.

With reference to the first aspect, in a possible implementation, the method further includes: determining an efficiency factor of the first device based on the actual distance in the first time period, the safety distance in the first time period, and an efficiency distance in the first time period, where the efficiency distance in the first time period corresponds to the preset safety distance rule; the efficiency distance is greater than the safety distance; the efficiency distance indicates a distance between the first device and the first obstacle when traffic efficiency of the first device is satisfied; the efficiency factor is obtained by using at least a second similarity S2 between the first mapping relationship, the second mapping relationship, and a third mapping relationship; and the third mapping relationship is a mapping relationship between the efficiency distance and the time that are in the first time period.

In the method, the efficiency factor of the first device may be obtained by obtaining the actual distance, the safety distance, and the efficiency distance that are of the first device in the first time period, to obtain an efficiency score and evaluate, at a fine granularity, whether efficiency of the safety distance design of the first device is good or bad.

With reference to the first aspect, in a possible implementation, the second similarity is obtained by using a third distance value T3 and a fourth distance value T4, the third distance value reflects a sum of a difference between an efficiency distance corresponding to the at least one moment in the first time period and a maximum value in the actual distance and the safety distance that correspond to the at least one moment in the first time period, and the fourth distance value reflects a sum of a difference between the efficiency distance and the safety distance that correspond to the at least one moment in the first time period.

In this implementation, that the second similarity may be obtained by sampling actual distances, safety distances, and efficiency distances that are at some time points in the first time period is described, to provide a basis for obtaining the efficiency factor accurately.

With reference to the first aspect, in a possible implementation, the third distance value reflects a sum of a difference between an efficiency distance corresponding to the any moment in the first time period and a maximum value in the actual distance and the safety distance that correspond to the any moment in the first time period, and the fourth distance value reflects a sum of a difference between the efficiency distance and the safety distance that correspond to the any moment in the first time period.

In this implementation, that the second similarity may also be obtained by sampling the actual distance, the safety distance, and an efficiency distance that correspond to each moment in the first time period is described, to provide a basis for obtaining the efficiency factor accurately.

With reference to the first aspect, in a possible implementation, the second similarity, the third distance value, and the fourth distance value satisfy the following relational expression: S2=T3/T4.

In this implementation, the relationship satisfied by the second similarity, the third distance value, and the fourth distance value is specified.

With reference to the first aspect, in a possible implementation, the second similarity is a second distance ratio, the second distance ratio reflects a ratio of a difference between an efficiency distance corresponding to a second moment in the first time period and a maximum value in an actual distance and a safety distance that correspond to the second moment in the first time period to a difference between the efficiency distance and the safety distance that correspond to the second moment.

In this implementation, another manner of obtaining the second similarity is described. The second similarity may be the second distance ratio, and the ratio is used to reflect a similarity between the first mapping relationship, the second mapping relationship, and the third mapping relationship.

With reference to the first aspect, in a possible implementation, the second distance ratio is less than or equal to a ratio of a difference between an efficiency distance corresponding to the any moment in the first time period and a maximum value in the actual distance and the safety distance that correspond to the any moment in the first time period to a difference between the corresponding efficiency distance and safety distance.

In this implementation, the second similarity is limited as a minimum ratio of the difference between the efficiency distance corresponding to the any moment in the first time period and the maximum value in the actual distance and the safety distance that correspond to the any moment in the first time period to the difference between the corresponding efficiency distance and safety distance, which is a most serious case in which the efficiency distance is not satisfied in proportion. In this way, the obtained second similarity is more accurate.

With reference to the first aspect, in a possible implementation, the efficiency factor is obtained by using at least the second similarity and at least one of the collision factor or a high-efficiency time proportion factor, where the collision factor indicates the case in which the collision occurs in the first time period, the high-efficiency time proportion factor indicates a ratio of total duration of one or more sub-periods in which an actual distance is less than a high-efficiency distance to the duration of the first time period, the high-efficiency distance in the first time period corresponds to the safety distance rule, and the high-efficiency distance is greater than the safety distance and less than the efficiency distance.

In this implementation, that in addition to obtaining the efficiency factor by using the second similarity, at least one of the collision factor or the high-efficiency time proportion factor may be introduced to obtain an accurate efficiency factor through combination is described.

With reference to the first aspect, in a possible implementation, a value of the efficiency factor is equal to a product of the second similarity and the collision factor.

With reference to the first aspect, in a possible implementation, a value of the efficiency factor is equal to a product of the second similarity and the high-efficiency time proportion factor.

With reference to the first aspect, in a possible implementation, a value of the efficiency factor is equal to a product of the second similarity, the collision factor, and the high-efficiency time proportion factor.

With reference to the first aspect, in a possible implementation, the method further includes: determining a comprehensive factor based on the safety factor and the efficiency factor, where the comprehensive factor is a product of the safety factor and the efficiency factor, or an average value of the safety factor and the efficiency factor, and the comprehensive factor is used to comprehensively evaluate safety and efficiency of the safety distance of the first device.

According to a second aspect, this application provides a safety factor obtaining apparatus, where the apparatus includes: an obtaining module, configured to obtain an actual distance between a first device and a first obstacle in a first time period; and a determining module, configured to determine a safety factor of the first device based on the actual distance in the first time period and a safety distance in the first time period, where the safety distance in the first time period corresponds to a preset safety distance rule, the safety factor is obtained by using at least a first similarity S 1 between a first mapping relationship and a second mapping relationship, the first mapping relationship is a mapping relationship between the actual distance and time that are in the first time period, and the second mapping relationship is a mapping relationship between the safety distance and the time that are in the first time period.

With reference to the second aspect, in a possible implementation, the first similarity is obtained by using a first distance value T1 and a second distance value T2, the first distance value reflects a sum of a minimum value in an actual distance and a safety distance that correspond to at least one moment in the first time period, and the second distance value reflects a sum of the safety distance corresponding to the at least one moment in the first time period.

With reference to the second aspect, in a possible implementation, the first distance value reflects a sum of a minimum value in an actual distance and a safety distance that correspond to any moment in the first time period, and the second distance value reflects a sum of the safety distance corresponding to the any moment in the first time period.

With reference to the second aspect, in a possible implementation, the first similarity, the first distance value, and the second distance value satisfy the following relational expression: $S1=T1/T2$.

With reference to the second aspect, in a possible implementation, the first similarity is a first distance ratio, and the first distance ratio reflects a ratio of a minimum value in an actual distance and a safety distance that correspond to a first moment in the first time period to the safety distance corresponding to the first moment.

With reference to the second aspect, in a possible implementation, the first distance ratio is less than or equal to a ratio of a minimum value in an actual distance and a safety distance that correspond to any moment in the first time period to the corresponding safety distance.

With reference to the second aspect, in a possible implementation, the safety factor is obtained by using at least the first similarity and at least one of a collision factor or a safety time proportion factor, the collision factor indicates a case in which collision occurs in the first time period, the safety time proportion factor indicates a ratio of total duration of one or more sub-periods in which an actual distance is greater than a safety distance to duration of the first time period, and the first time period includes at least one sub-period.

With reference to the second aspect, in a possible implementation, a value of the safety factor is equal to a product of the first similarity and the collision factor.

With reference to the second aspect, in a possible implementation, a value of the safety factor is equal to a product of the first similarity and the safety time proportion factor.

With reference to the second aspect, in a possible implementation, a value of the safety factor is equal to a product of the first similarity, the collision factor, and the safety time proportion factor.

With reference to the second aspect, in a possible implementation, the determining module is further configured to determine an efficiency factor of the first device based on the actual distance in the first time period, the safety distance in the first time period, and an efficiency distance in the first time period, where the efficiency distance in the first time period corresponds to the preset safety distance rule; the efficiency distance is greater than the safety distance; the efficiency distance indicates a distance between the first device and the first obstacle when traffic efficiency of the first device is satisfied; the efficiency factor is obtained by using at least a second similarity S2 between the first mapping relationship, the second mapping relationship, and a third mapping relationship; and the third mapping relationship is a mapping relationship between the efficiency distance and the time that are in the first time period.

With reference to the second aspect, in a possible implementation, the second similarity is obtained by using a third distance value T3 and a fourth distance value T4, the third distance value reflects a sum of a difference between an efficiency distance corresponding to the at least one moment in the first time period and a maximum value in the actual distance and the safety distance that correspond to the at least one moment in the first time period, and the fourth distance value reflects a sum of a difference between the efficiency distance and the safety distance that correspond to the at least one moment in the first time period.

With reference to the second aspect, in a possible implementation, the third distance value reflects a sum of a difference between an efficiency distance corresponding to the any moment in the first time period and a maximum value in the actual distance and the safety distance that correspond to the any moment in the first time period, and the fourth distance value reflects a sum of a difference between the efficiency distance and the safety distance that correspond to the any moment in the first time period.

With reference to the second aspect, in a possible implementation, the second similarity, the third distance value, and the fourth distance value satisfy the following relational expression: $S2=T3/T4$.

With reference to the second aspect, in a possible implementation, the second similarity is a second distance ratio, the second distance ratio reflects a ratio of a difference between an efficiency distance corresponding to a second moment in the first time period and a maximum value in an actual distance and a safety distance that correspond to the second moment in the first time period to a difference between the efficiency distance and the safety distance that correspond to the second moment.

With reference to the second aspect, in a possible implementation, the second distance ratio is less than or equal to a ratio of a difference between an efficiency distance corresponding to the any moment in the first time period and a maximum value in the actual distance and the safety distance that correspond to the any moment in the first time period to a difference between the corresponding efficiency distance and safety distance.

With reference to the second aspect, in a possible implementation, the efficiency factor is obtained by using at least the second similarity and at least one of the collision factor or a high-efficiency time proportion factor, where the collision factor indicates the case in which the collision occurs in the first time period, the high-efficiency time proportion factor indicates a ratio of total duration of one or more sub-periods in which an actual distance is less than a high-efficiency distance to the duration of the first time period, the high-efficiency distance in the first time period corresponds to the safety distance rule, and the high-efficiency distance is greater than the safety distance and less than the efficiency distance.

With reference to the second aspect, in a possible implementation, a value of the efficiency factor is equal to a product of the second similarity and the collision factor.

With reference to the second aspect, in a possible implementation, a value of the efficiency factor is equal to a product of the second similarity and the high-efficiency time proportion factor.

With reference to the second aspect, in a possible implementation, a value of the efficiency factor is equal to a product of the second similarity, the collision factor, and the high-efficiency time proportion factor.

With reference to the second aspect, in a possible implementation, the determining module is further configured to determine a comprehensive factor based on the safety factor and the efficiency factor, where the comprehensive factor is a product of the safety factor and the efficiency factor, or an average value of the safety factor and the efficiency factor, and the comprehensive factor is used to comprehensively evaluate safety and efficiency of the safety distance of the first device.

According to a third aspect, this application provides a safety factor obtaining apparatus, where the apparatus includes at least one processor and a memory, the processor is coupled to the memory, the memory stores program instructions, and when the program instructions stored in the memory are executed by the processor, the apparatus is enabled to perform the method according to the first aspect or any one of the possible implementations of the first aspect.

According to a fourth aspect, this application provides a safety factor obtaining system, where the system includes the apparatus according to the second aspect, the third aspect, or any one of the possible implementations of the second aspect or the third aspect.

According to a fifth aspect, this application provides a terminal device, where the terminal device includes the apparatus according to the second aspect, the apparatus according to the third aspect, or the system according to the fourth aspect.

According to a sixth aspect, this application provides a computer-readable storage medium, where the computer-readable storage medium is configured to store program instructions executed by a computer, and the program instructions include instructions used to perform the method according to the first aspect or any one of the possible implementations of the first aspect.

According to a seventh aspect, this application provides a computer program product, where the computer program product includes computer program instructions, and when the computer program instructions are run on a computer, the computer is enabled to implement the method according to the first aspect or any one of the possible implementations of the first aspect.

**BRIEF DESCRIPTION OF DRAWINGS**

FIG. 1 is a schematic diagram of an application scenario according to an embodiment of this application;
FIG. 2 is a flowchart of a safety factor obtaining method according to an embodiment of this application;
FIG. 3 is a schematic diagram of a moment at which an actual distance between a first device and a first obstacle is less than a safety distance in a simulation test scenario or a real vehicle test scenario according to an embodiment of this application;
FIG. 4 is a schematic diagram of a moment at which an actual distance between a first device and a first obstacle is greater than a safety distance in a simulation test scenario or a real vehicle test scenario according to an embodiment of this application;
FIG. 5 is a schematic diagram of an actual distance and a safety distance changing with time according to an embodiment of this application;
FIG. 6 is a schematic diagram of an integral area of a safety distance function f2 according to an embodiment of this application;
FIG. 7 is a schematic diagram of a function f4 according to an embodiment of this application;
FIG. 8 is a schematic diagram of an integral area of a function f4 according to an embodiment of this application;
FIG. 9 is a schematic diagram of a distance ratio of a function f5 according to an embodiment of this application;
FIG. 10 is a flowchart of an efficiency factor obtaining method according to an embodiment of this application;
FIG. 11 is a schematic diagram of an actual distance, a safety distance, and an efficiency distance of a first device according to an embodiment of this application;
FIG. 12 is a schematic diagram of an actual distance, a safety distance, and an efficiency distance changing with time according to an embodiment of this application;
FIG. 13 is a schematic diagram of an integral area of a function f6 according to an embodiment of this application;
FIG. 14 is a schematic diagram of a function f7 according to an embodiment of this application;
FIG. 15 is a schematic diagram of an integral area of a function f8 according to an embodiment of this application;
FIG. 16 is a schematic diagram of a distance ratio of a function f9 according to an embodiment of this application;
FIG. 17 is a schematic diagram in which an actual distance, a safety distance, an efficiency distance, and a high-efficiency distance that are of a driving device and that change with time according to an embodiment of this application;
FIG. 18 is a schematic diagram of a structure of an apparatus according to an embodiment of this application; and
FIG. 19 is a schematic diagram of an apparatus according to another embodiment of this application.

**DESCRIPTION OF EMBODIMENTS**

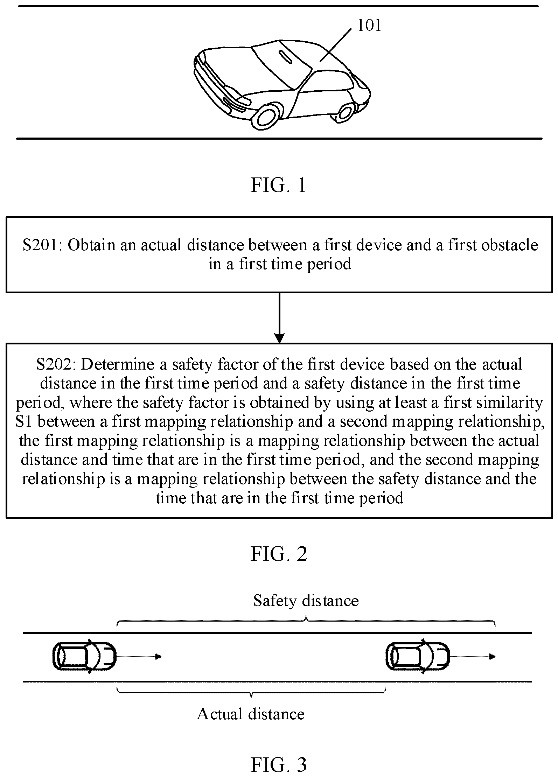

FIG. 1 is a schematic diagram of an application scenario according to an embodiment of this application. As shown in FIG. 1, a driving device 101 travels on a road, an intelligent assisted driving system is deployed on the driving device 101, and a safety distance rule is preset in the intelligent assisted driving system. In a traveling process of the driving device 101, the intelligent assisted driving system calculates, according to the safety distance rule, a safety distance required by a current status of the driving device 101, and controls, based on the safety distance, an actual distance between the driving device 101 and an obstacle, for example, determining whether to perform an operation like braking or acceleration.

The driving device 101 may be a device like a vehicle or an airplane.

It may be understood that the scenario shown in FIG. 1 is merely an example, and technical solutions in this application may be further applied to another scenario. For example, the technical solutions in this application may be further applied to scenarios such as an intelligent robot and an unmanned aerial vehicle.

For example, the driving device is a vehicle, and the intelligent assisted driving system is a driving automation system of the vehicle. Functions to be implemented by the driving automation system mainly include sensing prediction, decision-making and planning, vehicle control, and the like. A sensing module is an "eye" of the vehicle with the driving automation system, and is configured to sense an environment, an obstacle, and the like. A prediction module predicts a trajectory of the obstacle in a subsequent period based on detected and tracked obstacle information. A decision-making and planning module is a "brain" of the vehicle with the driving automation system, and generally implements three functions such as route planning, behavior decision-making, and motion planning. The route planning refers to planning a route from a start place to a destination based on information such as the start place, the destination, and roads on a map. The behavior decision-making refers to making a specific behavior decision, like overtaking or lane change, based on information such as a route planning result, a current environment, and the obstacle. The motion planning refers to planning, based on a behavior decision-making result, a trajectory point that satisfies a specific constraint, for example, a trajectory point when overtaking is performed.

The decision-making and planning module is very important for the vehicle with the driving automation system, and whether output of the decision-making and planning module is correct directly affects driving safety of the vehicle. Therefore, the decision-making and planning module needs to comply with some safety rules, legality rules, and the like in both a design phase and a test phase.

The safety distance between the vehicle and the obstacle needs to be considered during decision-making and planning. For example, time-to-collision (time-to-collision, TTC), a safety time domain (safety time domain, STD), and the like are considered in a common safety distance design criterion. The TTC describes remaining time in which two target vehicles arrive a collision point. When the TTC is less than a specific threshold, the vehicles need to take a measure, for example, braking, to avoid or mitigate collision. The STD describes whether a time difference between two target vehicles at a same location point satisfies a safety time difference condition. If the time difference does not satisfy the safety time difference condition, the target vehicles need to take a measure, for example, braking, so that the time difference at the same location point satisfies the safety condition. In addition, there are some definitions of the safety distance in traffic rules. For example, the Article 80 of the Road Traffic Safety Implementation Regulations stipulates that: "When a motor vehicle runs on a highway and the speed exceeds 100 km/h, the distance between the motor vehicle and the vehicle in front of the same lane shall be greater than 100 meters; and when the speed is lower than 100 km/h, the distance between the motor vehicle and the vehicle in front of the same lane may be appropriately shortened, but the minimum distance shall not be less than 50 meters".

Safety distance rules designed by driving device manufacturers are different. If a designed safety distance is not enough, a collision accident between the vehicle and the obstacle is easily caused. If the designed safety distance is excessively conservative, a distance between the vehicle and the obstacle is excessively long, which reduces flexibility of the decision-making and planning. To ensure safety of the vehicle, a safety test needs to be performed on a safety distance set in the driving automation system of the vehicle with the driving automation system.

Currently, in a safety test technology related to the safety distance, a large quantity of scenarios are preset, and the vehicle with the driving automation system is tested in each scenario. When the vehicle travels in each test scenario, if an actual distance between the vehicle and the obstacle at at least one moment cannot satisfy the safety distance, it is determined that the vehicle is unsafe in the scenario; on the contrary, if the actual distance between the vehicle and the obstacle at any moment can satisfy the safety distance, it is determined that the vehicle is safe in the scenario.

However, in this test method, only scenarios in which the vehicle with the driving automation system is safe and scenarios in which the vehicle with the driving automation system is unsafe based on the safety distance can be measured, but a safety degree of the vehicle based on the safety distance in these unsafe scenarios cannot be measured, or an advantage degree or a disadvantage degree of the safety distance of the vehicle in these unsafe scenarios cannot be measured.

Therefore, how to learn of safety of a safety distance of a tested driving device in an unsafe scenario has become an urgent technical problem to be resolved.

In view of this, this application provides a safety factor obtaining method, to evaluate safety degrees of different safety distance designs.

The following describes technical solutions of this application by using the accompanying drawings and specific embodiments. It may be understood that the following specific embodiments may be mutually combined, and same or similar concepts or processes may not be repeatedly described in some embodiments.

FIG. 2 is a flowchart of a safety factor obtaining method according to an embodiment of this application. As shown in FIG. 2, the method in this embodiment may include steps S201 and S202.

S201: Obtain an actual distance between a first device and a first obstacle in a first time period.

In a traveling process of the first device, a continuous time period is selected as the first time period, and an actual distance that is between the first device and the first obstacle and that is corresponding to each moment in the first time period is collected.

Optionally, the actual distance may be obtained in a plurality of manners, for example, by using a sensor and a vehicle wireless communication technology (vehicle to everything, V2X). The actual distance may be measured in a space dimension, and a unit may be meter; or the actual distance may be measured in a time dimension, and a unit may be second. For example, the safety distance is a 3-second time distance from an obstacle behind the first device to the first device, or 3-second TTC, or a 3-second STD. This is not limited in this application. It should be noted that a person skilled in the art may understand that, in an actual scenario, regardless of which manner is used to measure or evaluate an actual distance, a specific error is allowed, or the actual distance satisfies a specific precision range. Therefore, the "actual distance" herein is used to express a relatively actual distance obtained through measurement or evaluation.

In embodiments of this application, the first device may also be referred to as a driving device.

S202: Determine a safety factor of the first device based on the actual distance in the first time period and a safety distance in the first time period, where the safety factor is obtained by using at least a first similarity $S_1$ between a first mapping relationship and a second mapping relationship, the first mapping relationship is a mapping relationship between the actual distance and time that are in the first time period, and the second mapping relationship is a mapping relationship between the safety distance and the time that are in the first time period.

In a possible scenario, the safety factor may be output in a manner of sound, a text, or light emitting, to remind a passenger or a driver. For example, when the vehicle travels in a state in which an automated driving system or an assisted driving system is enabled, the vehicle may perform self-check on the state, to obtain the safety factor. Values of different safety factors may correspond to different sound, texts, or light emitting manners. These corresponding manners may be preset or dynamically configured. This is not specifically limited in this application.

The safety distance in the first time period corresponds to a preset safety distance rule. In other words, a safety distance corresponding to the first device at each moment in the first time period is determined according to the preset safety distance rule in the first device and one or more of a status of the first device in the first time period or a status of a surrounding environment.

Optionally, generally, the safety distance rule is designed by a device manufacturer before the first device is delivered, and is pre-stored in the first device. In a usage process of the first device, the safety distance rule may be flexibly adapted and updated based on an actual situation, and an over-the-air (over-the-air technology, OTA) technology may be further used during update. The status of the first device in the first time period includes one or more of a speed of the first device, a technical status of a braking apparatus, a technical status of a steering apparatus, a weight bearing capacity of the first device, or the like. The status of the surrounding environment includes, for example, a weather and/or a road condition in which the first device is located.

For example, the safety distance may be a fixed value, for example, 50 meters or the 3-second TTC, or may be a variable value. For example, when the vehicle speed is greater than 100 km/h, the safety distance is 100 meters; or when the vehicle speed is less than 100 km/h, the safety distance is 50 meters. A design method of the safety distance is not limited in this application.

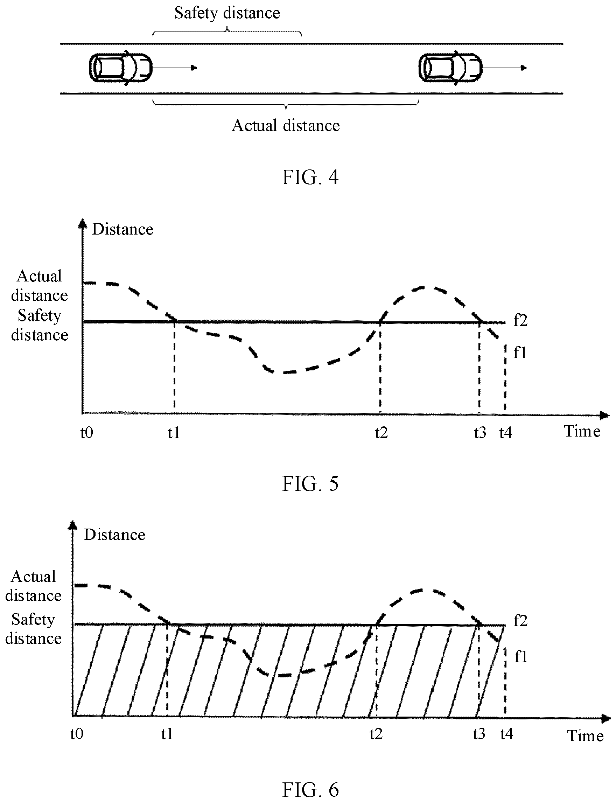

For example, FIG. 3 is a schematic diagram of a moment at which the actual distance between the first device and the first obstacle is less than the safety distance in a simulation test scenario or a real vehicle test scenario, and FIG. 4 is a schematic diagram of a moment at which the actual distance between the first device and the first obstacle is greater than the safety distance in a simulation test scenario or a real vehicle test scenario.

It should be noted that in embodiments of this application, a fixed safety distance is used as an example for description.

In an example, the first mapping relationship may be referred to as a function f1, the second mapping relationship may be referred to as a function f2, and f1 and f2 may be continuous or discrete. A form of the function is not limited in this application.

In an optional implementation, the first similarity is obtained by using a first distance value T1 and a second distance value T2, the first distance value reflects a sum of a minimum value in an actual distance and a safety distance that correspond to at least one moment in the first time period, and the second distance value reflects a sum of the safety distance corresponding to the at least one moment in the first time period. In other words, the first similarity may be obtained by sampling actual distances and safety distances that are at some time points in the first time period.

Optionally, the first distance value reflects a sum of a minimum value in an actual distance and a safety distance that correspond to any moment in the first time period, and the second distance value reflects a sum of the safety distance corresponding to the any moment in the first time period. In other words, the first similarity may also be obtained by sampling an actual distance and a safety distance that correspond to each moment in the first time period.

In other words, the first similarity may be obtained by sampling actual distances and safety distances that are at some time points in the first time period, and may also be obtained by sampling the actual distance and the safety distance that correspond to each moment in the first time period, to provide a basis for obtaining the safety factor accurately.

Specifically, the first similarity, the first distance value, and the second distance value satisfy the following relational expression:

$$S1=T1/T2$$

S1 indicates the first similarity, T1 indicates the first distance value, and T2 indicates the second distance value.

In an example, this embodiment may also be described as follows: The first similarity S 1 is determined according to the function f1 and the function f2. Specifically, a schematic diagram of the function f1 and the function f2 is shown in FIG. 5. An integral area Ss1 of the function f2 is calculated according to the function f2, and the integral area is an area of a slashed region in FIG. 6.

Optionally, the integral area of the function f2 may be calculated by using an integral formula, or the function f2 may be discretized, and the integral area of the function f2 is approximated by summing up areas of small rectangles obtained through discretization. A method for solving the integral area of the function is not limited in this application.

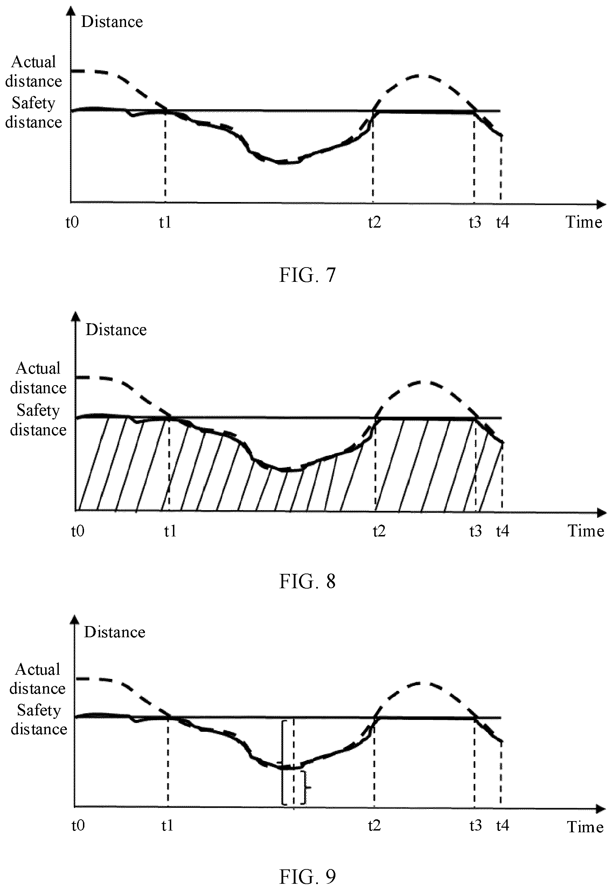

A function f4=min(f1, f2) is determined according to the function f1 and the function f2. In other words, distance information corresponding to the function f4 at each moment in the first time period is a minimum value in distance information of f1 and distance information of f2 that correspond to each moment, as shown by a thicker line curve in FIG. 7.

An integral area Ss2 of the function f4 is determined according to the function f4. As shown in FIG. 8, Ss2 is an area of a slashed region.

According to the integral area Ss1 of the function f2 and the integral area Ss2 of the function f4, the first similarity between the function f1 and the function f2 is S1=Ss2/Ss1. For clear description of the solution, in this application, a plurality of steps are used to describe a manner of obtaining the foregoing similarity. However, a person skilled in the art may learn that in actual implementation, the foregoing similarity may be obtained by using one or more steps, or the foregoing similarity may be obtained in another manner. This is not specifically limited in this application. The explanation in this paragraph is also referred to for similar illustrations in the following.

Optionally, a method for calculating two areas used for calculating the safety factor is not limited in this application. For example, a method for calculating Ss2 further includes determining time regions [t1, t2] and [t3, t4] in which the actual distance function f1 is less than the safety distance function f2, and determining an integral area Ss3 of the safety distance function f2 relative to the actual distance function f1 in the foregoing time regions, where Ss2=Ss1+Ss3, and in this case, the first similarity is S1=Ss2/Ss1. An area calculation method in the following embodiments is also not limited.

In another optional implementation, the first similarity is a first distance ratio, and the first distance ratio reflects a ratio of a minimum value in an actual distance and a safety distance that correspond to a first moment in the first time period to the safety distance corresponding to the first moment. Further, the first distance ratio is less than or equal to a ratio of a minimum value in an actual distance and a safety distance that correspond to any moment in the first time period to the corresponding safety distance.

In other words, the first similarity is a minimum ratio of the minimum value in the actual distance and the safety distance that correspond to the any moment in the first time period to the corresponding safety distance, and the ratio is used to reflect a similarity between the first mapping relationship and the second mapping relationship.

In an example, this embodiment may also be described as follows: According to the function f2 and the function f4, a function f5=f4/f2 is determined, and that the first similarity is S1=min(f5) is further determined, where a minimum value of the function f5 indicates a most serious case in which the safety distance is not satisfied in proportion, for example, a ratio of a value in a right bracket to a value in a left bracket in FIG. 9.

Optionally, when only the similarity between the first mapping relationship and the second mapping relationship is considered, the safety factor of the first device is the first similarity of the first device. Correspondingly, a safety score is a product of a total score and the safety factor. A total score of the safety factor is not limited in this application. For example, the total score may be 100, 10, 5, or 1. An average safety score is determined based on safety scores of a plurality of scenarios in a scenario set.

In an optional implementation, the safety factor is obtained by using at least the first similarity and at least one of a collision factor or a safety time proportion factor, the collision factor indicates a case in which collision occurs in the first time period, the safety time proportion factor indicates a ratio of total duration of one or more sub-periods in which an actual distance is greater than a safety distance to duration of the first time period, and the first time period includes at least one sub-period.

Specifically, when the first device collides in the first time period, the collision factor is 0; otherwise, the collision factor is 1.

Optionally, a value of the safety factor is equal to a product of the first similarity and the collision factor.

Optionally, a value of the safety factor is equal to a product of the first similarity and the safety time proportion factor.

Optionally, a value of the safety factor is equal to a product of the first similarity, the collision factor, and the safety time proportion factor.

In other words, a combination manner of determining the safety factor based on the collision factor, the safety time proportion factor, and the first similarity is not limited in this application. A free combination is allowed to obtain an accurate safety factor.

In an example, it is assumed that the safety factor is Fs, and the safety time proportion factor is q, a value of the safety time proportion factor q is a ratio of a time length in which f1 is greater than f2 to a total simulation time length, that is, a time length of the first time period. For details, refer to a specific time point shown in FIG. 5. The safety time proportion factor q=((t1-t0)+(t3-t2))/(t4-t0), that is, a safety time proportion factor of a safety method with a high safety time proportion is greater than a safety time proportion factor of a safety method with a low safety time proportion.

For example, a final safety factor is Fs, or p*Fs, or q*Fs, or p*q*Fs.

According to the method in this embodiment, safety of the safety distance of the first device may be evaluated by using a single scenario at a fine granularity. In addition, the collision factor and the safety time proportion factor may be combined with different factors to make evaluation comprehensive and reasonable. Further, an advantage degree or a disadvantage degree of the safety distance of the driving device in these unsafe scenarios is learned, a safety distance that corresponds to a large quantity of safe scenarios and that is advantageous in the unsafe scenarios may be selected, so that safety of the driving device in these unsafe scenarios can be improved, thereby improving safety of the driving device.

The foregoing is evaluation of the safety of the safety distance of the driving device. In addition, efficiency of the safety distance of the driving device may also be used as an evaluation indicator. For example, if a designed safety distance is excessively conservative, and a distance between a vehicle and an obstacle is excessively large, flexibility of decision-making and planning is reduced, and traffic efficiency of the vehicle is reduced.

Currently, in a conventional technology, a traffic efficiency evaluation dimension generally includes a road section dimension and an intersection dimension. Indicators of road section traffic efficiency evaluation include comprehensive transportation efficiency, which is measured by using a total mileage of all vehicles in a unit time traffic flow, an average vehicle speed, and road density. Representation indicators of intersection traffic efficiency include queuing strength, average vehicle delay time, and a quantity of vehicles passing through an intersection per unit time. The queuing strength is measured by using a queue length or a ratio of the queue length to a road length. The average vehicle delay time is measured by using an average value of delay time of vehicles passing through the intersection. In this manner, system-level simulation of a large quantity of unmanned driving vehicles is required, and the vehicles need to be randomly distributed. The foregoing evaluation indicators can be collected only after a large quantity of experiments are performed by setting different vehicle flow density, which is a complex process with low efficiency.

In view of this, this application further provides an efficiency factor obtaining method, and efficiency of the safety distance of the first device can be evaluated by using a single scenario. A specific obtaining method is described in detail in the following embodiments. Details that are the same as those in the foregoing embodiment are not described herein again.

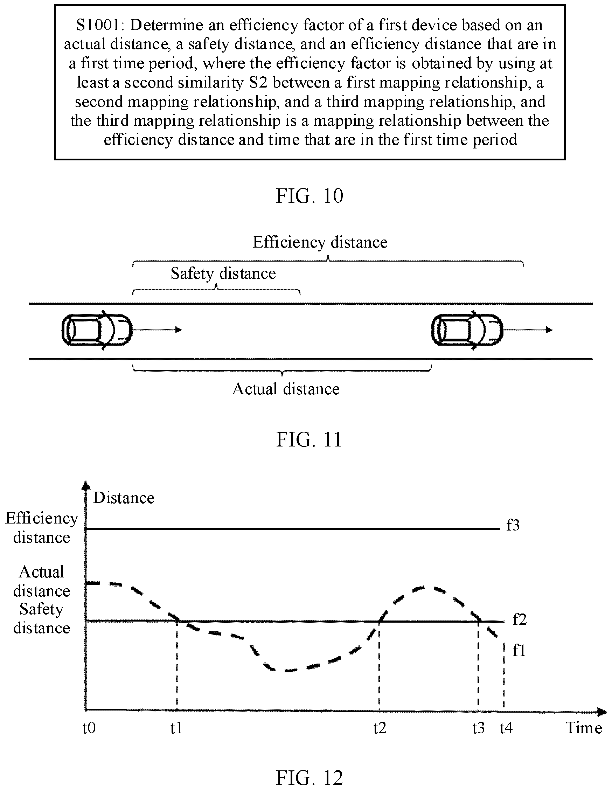

FIG. 10 is a flowchart of an efficiency factor obtaining method according to an embodiment of this application. As shown in FIG. 10, the method in this embodiment may include step S1001.

S1001: Determine an efficiency factor of a first device based on an actual distance, a safety distance, and an efficiency distance that are in a first time period, where the efficiency factor is obtained by using at least a second similarity S2 between a first mapping relationship, a second mapping relationship, and a third mapping relationship, and the third mapping relationship is a mapping relationship between the efficiency distance and time that are in the first time period.

The efficiency distance in the first time period corresponds to a preset safety distance rule; the efficiency distance is greater than the safety distance; and the efficiency distance indicates a distance between the first device and a first obstacle when traffic efficiency of the first device is satisfied.

Optionally, the efficiency distance may be measured in a space dimension, and a unit may be meter; or may be measured in a time dimension, and a unit may be second.

For example, the efficiency distance may be a fixed value, for example, 100 meters or 6-second TTC, or may be a variable value. For example, when a vehicle speed is greater than 100 km/h, the safety distance is 200 meters; and when the vehicle speed is less than 100 km/h, the safety distance is 100 meters. A design method of the efficiency distance is not limited in this application.

It should be noted that in embodiments of this application, a fixed efficiency distance is used as an example for description.

FIG. 11 is a schematic diagram of the actual distance, the safety distance, and the efficiency distance of the first device according to an embodiment of this application. It can be learned from FIG. 11 that the efficiency distance is greater than the safety distance.

In an example, the third mapping relationship may be referred to as a function f3, and f3 may be continuous or discrete. A form of the function is not limited in this application. f3 may be a large distance, for example, f3 may be n times of f2, where n is greater than 1; or f3 may be greater than f2 by a fixed or non-fixed distance; or f3 may be a maximum value of the function f2 in entire simulation duration, which is specifically shown in FIG. 12.

In an optional implementation, the second similarity is obtained by using a third distance value T3 and a fourth distance value T4, the third distance value reflects a sum of a difference between an efficiency distance corresponding to at least one moment in the first time period and a maximum value in an actual distance and a safety distance that correspond to the at least one moment in the first time period, and the fourth distance value reflects a sum of a difference between the efficiency distance and the safety distance that correspond to the at least one moment in the first time period. In other words, the second similarity may be obtained by sampling actual distances, safety distances, and efficiency distances that are at some time points in the first time period.

Optionally, the third distance value reflects a sum of a difference between an efficiency distance corresponding to the any moment in the first time period and a maximum value in the actual distance and the safety distance that correspond to the any moment in the first time period, and the fourth distance value reflects a sum of a difference between the efficiency distance and the safety distance that correspond to the any moment in the first time period. In other words, the second similarity may also be obtained by sampling an actual distance, a safety distance, and an efficiency distance that correspond to each moment in the first time period.

In other words, the second similarity may be obtained by sampling actual distances, safety distances, and efficiency distances that are at some time points in the first time period, and may also be obtained by sampling the actual distance, the safety distance, and the efficiency distance that correspond to each moment in the first time period, to provide a basis for obtaining the efficiency factor accurately.

Specifically, the second similarity, the third distance value, and the fourth distance value satisfy the following relational expression:

$$S2=T3/T4$$

S2 indicates the second similarity, T3 indicates the third distance value, and T4 indicates the fourth distance value.

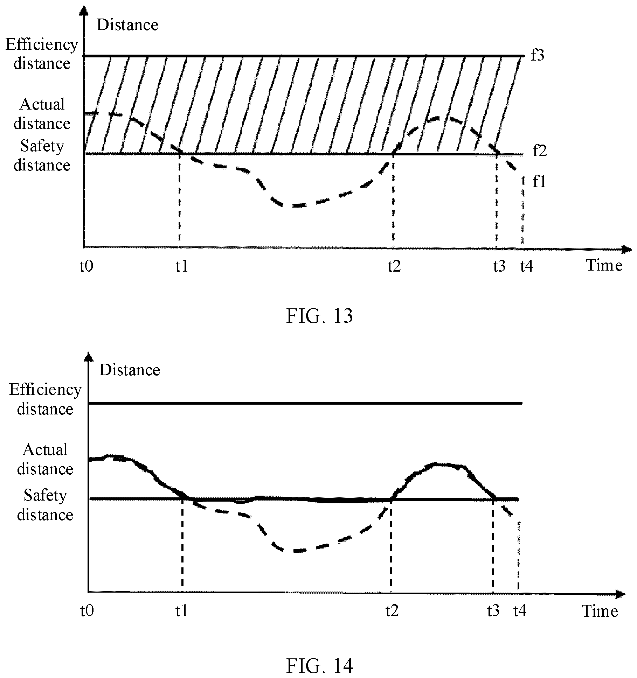

In an example, this embodiment may also be described as follows: The second similarity is determined according to a function f1, the function f2, and the function f3. Specifically, according to the function f2 and the function f3, the function f6=f3-f2 is determined, and an integral area Se1 of the function f6 is calculated. The integral area is an area of a slashed region in FIG. 13.

Optionally, when the integral area of the function f6 is calculated, an integral formula may be used, or the function f6 may be discretized, and the integral area of the function f6 is approximated by summing up areas of small rectangles obtained through discretization. A method for solving the integral area of the function is not limited in this application.

Further, a function f7=max(f1, f2) is determined according to the function f1 and the function f2. In other words, distance information corresponding to the function f7 at each moment in the first time period is a maximum value in distance information of f1 and distance information of f2 that correspond to each moment, as shown by a thicker line curve in FIG. 14.

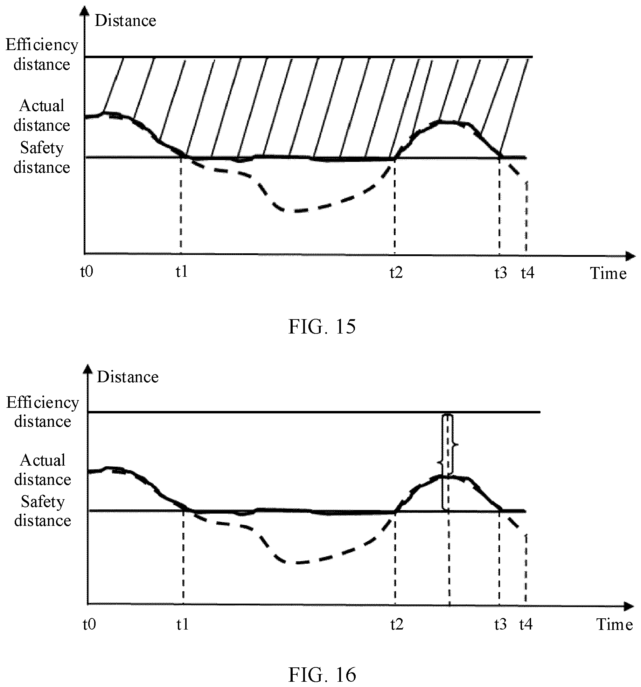

According to the function f3 and the function f7, a function f8=f3-f7 is determined, and an integral area Se2 of the function f8 is determined. As shown in FIG. 15, Se2 is an area of a slashed region.

According to the integral area Se1 of the function f6 and the integral area Se2 of the function f8, the second similarity between the function f1, the function f2, and the function f3 is S2=Se2/Se 1.

In another optional implementation, the second similarity is a second distance ratio, the second distance ratio reflects a ratio of a difference between an efficiency distance corresponding to a second moment in the first time period and a maximum value in an actual distance and a safety distance that correspond to the second moment in the first time period to a difference between the efficiency distance and the safety distance that correspond to the second moment. Further, the second distance ratio is less than or equal to a ratio of a difference between an efficiency distance corresponding to the any moment in the first time period and a maximum value in the actual distance and the safety distance that correspond to the any moment in the first time period to a difference between the corresponding efficiency distance and safety distance.

In other words, the second similarity is a minimum ratio of the difference between the efficiency distance corresponding to the any moment in the first time period and the maximum value in the actual distance and the safety distance that correspond to the any moment in the first time period to the difference between the corresponding efficiency distance and safety distance, and the ratio is used to reflect a similarity between the first mapping relationship, the second mapping relationship, and the third mapping relationship.

In an example, this embodiment may also be described as follows: According to the function f6 and the function f8, a function f9=f8/f6 is determined, and that the second similarity is S2=min(f9) is further determined, where a minimum value of the function f9 indicates a most serious case in which the efficiency distance is not satisfied in proportion, for example, a ratio of a value in a right bracket to a value in a left bracket in FIG. 16.

Optionally, when only the similarity between the first mapping relationship, the second mapping relationship, and the third mapping relationship is considered, the efficiency factor of a driving device is the second similarity of the driving device. Correspondingly, an efficiency score is a product of a total score and the efficiency factor. A total score of the efficiency factor is not limited in this application. For example, the total score may be 100, 10, 5, or 1. An average efficiency score is determined based on efficiency scores of a plurality of scenarios in a scenario set.

In an optional implementation, the efficiency factor is obtained by using at least the second similarity and at least one of a collision factor or a high-efficiency time proportion factor, where the collision factor indicates a case in which collision occurs in the first time period, the high-efficiency time proportion factor indicates a ratio of total duration of one or more sub-periods in which an actual distance is less than a high-efficiency distance to duration of the first time period, and the high-efficiency distance is greater than the safety distance and less than the efficiency distance.

The high-efficiency distance is determined according to a preset safety distance rule, and the high-efficiency distance may be measured in a space dimension, and a unit may be meter; or may be measured in a time dimension, and a unit may be second.

For example, the high-efficiency distance may be a fixed value, for example, 60 meters or 3.4-second TTC, or may be a variable value. For example, when a vehicle speed is greater than 100 km/h, the safety distance is 120 meters; and when the vehicle speed is less than 100 km/h, the safety distance is 60 meters. A design method of the high-efficiency distance is not limited in this application.

It should be noted that in embodiments of this application, a fixed high-efficiency distance is used as an example for description.

Specifically, when the first device collides in the first time period, the collision factor is 0; otherwise, the collision factor is 1.

Optionally, a value of the efficiency factor is equal to a product of the second similarity and the collision factor.

Optionally, a value of the efficiency factor is equal to a product of the second similarity and the high-efficiency time proportion factor.

Optionally, a value of the efficiency factor is equal to a product of the second similarity, the collision factor, and the high-efficiency time proportion factor.

It is understood that a combination manner of determining the efficiency factor based on the collision factor, the high-efficiency time proportion factor, and the second similarity is not limited in this application. A free combination is allowed to obtain an accurate efficiency factor.

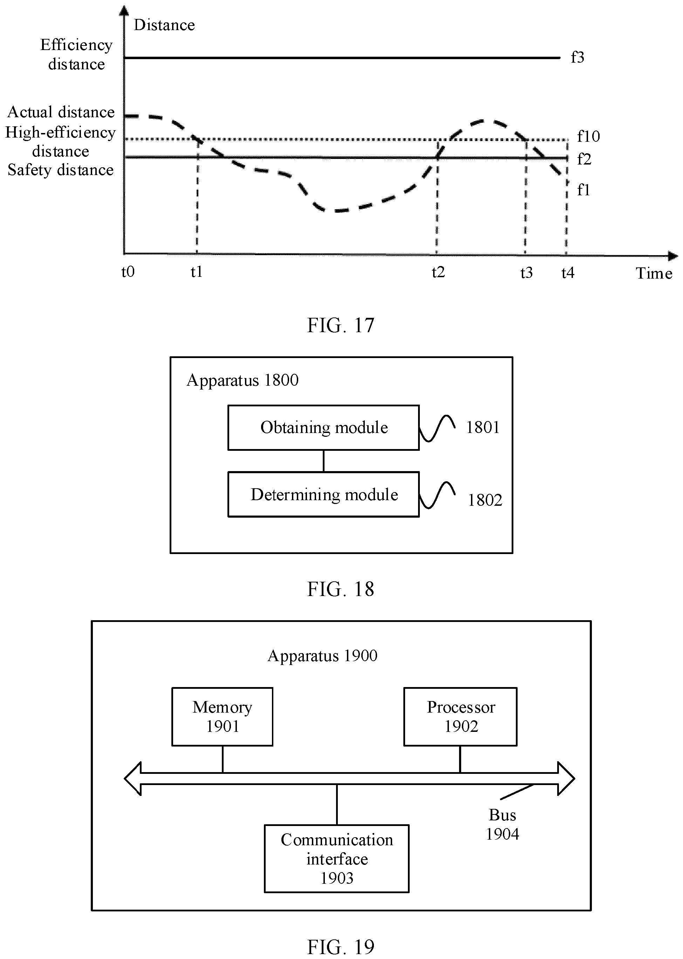

In an example, a function f10 indicating the high-efficiency distance of the driving device changes with time is determined based on the high-efficiency distance in the first time period and corresponding time information. FIG. 17 is a schematic diagram of an actual distance, a safety distance, an efficiency distance, and a high-efficiency distance that change with time and that are of a driving device according to an embodiment of this application. It can be learned from FIG. 17 that the high-efficiency distance is greater than the safety distance and less than the efficiency distance.

It is assumed that an efficiency factor is Fe, a high-efficiency time proportion factor is w, and the high-efficiency distance may be a distance slightly greater than the safety distance, for example, f10 may be m times of f2, where m is greater than 1, and m is less than n, or f10 may be greater than f2 by a fixed distance or non-fixed distance. Similarly, f10 may be continuous or discrete.

A value of the high-efficiency time proportion factor w is a ratio of a time length in which f1 is less than f10 to a total simulation time length, that is, a time length of a first time period. For details, refer to a specific time point shown in FIG. 17. The high-efficiency time proportion factor $w=((t2+t1)+(t4+t3))/(t4+t0)$, that is, a high-efficiency time proportion factor of a safety method with a high high-efficiency time proportion is greater than a high-efficiency time proportion factor of a safety method with a low high-efficiency time proportion.

Optionally, obtaining of the efficiency factor may further be freely combined with the foregoing safety time proportion factor. A combination method is not limited in this application.

For example, the final efficiency factor is Fe, or $p*Fe$, or $q*Fe$, or $p*q*Fe$, or $w*Fe$, or $p*w*Fe$, or $p*q*w*Fe$.

According to the method in this embodiment, the efficiency factor of the first device may be obtained by using a single scenario, and then an efficiency score is obtained, so that efficiency of the safety distance of the first device may be evaluated at a fine granularity. In addition, a collision factor, the safety time proportion factor, and the high-efficiency time proportion factor may be combined with different factors to make evaluation comprehensive and reasonable.

After safety and efficiency of the safety distance of the driving device are obtained, a comprehensive factor may be obtained based on the safety and the efficiency of the safety distance of the driving device. The comprehensive factor is a product of a safety factor and the efficiency factor, or an average value or a weighted average value of the safety factor and the efficiency factor, for example, $F=Fs*Fe$ or $F=(Fs+Fe)/2$. A method for obtaining the comprehensive factor is not limited in this application, and the comprehensive factor is used to comprehensively evaluate safety and efficiency of the safety distance of the driving device. Correspondingly, a comprehensive score is a product of a total score and the comprehensive factor. A total score of the comprehensive factor is not limited in this application. For example, the total score may be 100, 10, 5, or 1. An average comprehensive score is determined based on comprehensive scores of a plurality of scenarios in a scenario set.

According to the method in this application, formal traffic rules may be introduced into traffic behavior compliance evaluation, and most traffic rules may be covered, including simple scenarios and complex scenarios. It may be determined, based on the traffic behavior compliance evaluation, whether behavior of a vehicle with a driving automation system or an output result of a decision-making and planning part complies with the traffic rules. A preset classification principle and a preset leveling principle are used when traffic rule atomic propositions are extracted, so that a traffic rule atomic proposition logic is clear, omission is avoided, a reuse rate is high, and judgment efficiency of an entire system can also be improved.

Optionally, in the conventional technology, based on a degree to which a driving automation system can execute a dynamic driving task, and based on role allocation in executing the dynamic driving task and whether a running range limitation is designed, driving automation is divided into levels 0 to 5. Levels 0 to 2 are assisted driving, a system assists a human in executing the dynamic driving task, and a driving subject is still a driver. Levels 3 to 5 are automated driving, the system performs the dynamic driving task in place of the human in a designed running condition, and when a function is activated, the driving subject is the system. For foreign and domestic traffic accidents related to driving automation, a driving automation leveling standard strengthens the safety factor in each driving automation level.

The technical solutions of this application are mainly applied to a driving automation simulation evaluation system. The system may be located in a driving automation simulation system, and is configured to evaluate safety and efficiency of output of a driving automation decision-making and planning module or behavior of an entire vehicle. In addition, the system may be located in a driving automation vehicle system. In a running process of the vehicle, safety and efficiency of the output of the driving automation decision-making and planning module or the behavior of the entire vehicle are evaluated. In addition to evaluation, the vehicle may further plan a traveling route based on the safety factor and the efficiency factor. For example, a current value of the safety factor is excessively low, and the vehicle needs to improve the safety factor of a trajectory by performing an operation like braking or steering. An application scenario of the system is not limited in this application.

FIG. 18 is a schematic diagram of a structure of an apparatus according to an embodiment of this application. As shown in FIG. 18, an apparatus 1800 includes an obtaining module 1801 and a determining module 1802.

The obtaining module 1801 is configured to obtain an actual distance between a first device and a first obstacle in a first time period; and the determining module 1802 is configured to determine a safety factor of the first device based on the actual distance in the first time period and a safety distance in the first time period, where the safety distance in the first time period corresponds to a preset safety distance rule, the safety factor is obtained by using at least a first similarity S1 between a first mapping relationship and a second mapping relationship, the first mapping relationship is a mapping relationship between the actual distance and time that are in the first time period, and the second mapping relationship is a mapping relationship between the safety distance and the time that are in the first time period.

In an example, the apparatus 1800 may be configured to perform the methods shown in FIG. 2 and FIG. 10. For example, the obtaining module 1801 is configured to perform step S201, and the determining module 1802 is configured to perform steps S202 and S1001.

In a possible implementation, the first similarity is obtained by using a first distance value T1 and a second distance value T2, the first distance value reflects a sum of a minimum value in an actual distance and a safety distance that correspond to at least one moment in the first time period, and the second distance value reflects a sum of the safety distance corresponding to the at least one moment in the first time period.

In a possible implementation, the first distance value reflects a sum of a minimum value in an actual distance and a safety distance that correspond to any moment in the first time period, and the second distance value reflects a sum of the safety distance corresponding to the any moment in the first time period.

In a possible implementation, the first similarity, the first distance value, and the second distance value satisfy the following relational expression: $S1=T1/T2$.

In a possible implementation, the first similarity is a first distance ratio, and the first distance ratio reflects a ratio of a minimum value in an actual distance and a safety distance that correspond to a first moment in the first time period to the safety distance corresponding to the first moment.

In a possible implementation, the first distance ratio is less than or equal to a ratio of a minimum value in an actual distance and a safety distance that correspond to any moment in the first time period to the corresponding safety distance.

In a possible implementation, the safety factor is obtained by using at least the first similarity and at least one of a collision factor or a safety time proportion factor, the collision factor indicates a case in which collision occurs in the first time period, the safety time proportion factor indicates a ratio of total duration of one or more sub-periods in which an actual distance is greater than a safety distance to duration of the first time period, and the first time period includes at least one sub-period.

In a possible implementation, a value of the safety factor is equal to a product of the first similarity and the collision factor.

In a possible implementation, a value of the safety factor is equal to a product of the first similarity and the safety time proportion factor.

In a possible implementation, a value of the safety factor is equal to a product of the first similarity, the collision factor, and the safety time proportion factor.

In a possible implementation, the determining module 1802 is further configured to determine an efficiency factor of the first device based on the actual distance in the first time period, the safety distance in the first time period, and an efficiency distance in the first time period, where the efficiency distance in the first time period corresponds to the preset safety distance rule; the efficiency distance is greater than the safety distance; the efficiency distance indicates a distance between the first device and the first obstacle when traffic efficiency of the first device is satisfied; the efficiency factor is obtained by using at least a second similarity S2 between the first mapping relationship, the second mapping relationship, and a third mapping relationship; and the third mapping relationship is a mapping relationship between the efficiency distance and the time that are in the first time period.

In a possible implementation, the second similarity is obtained by using a third distance value T3 and a fourth distance value T4, the third distance value reflects a sum of a difference between an efficiency distance corresponding to at least one moment in the first time period and a maximum value in an actual distance and a safety distance that correspond to the at least one moment in the first time period, and the fourth distance value reflects a sum of a difference between the efficiency distance and the safety distance that correspond to the at least one moment in the first time period.

In a possible implementation, the third distance value reflects a sum of a difference between an efficiency distance corresponding to the any moment in the first time period and a maximum value in the actual distance and the safety distance that correspond to the any moment in the first time period, and the fourth distance value reflects a sum of a difference between the efficiency distance and the safety distance that correspond to the any moment in the first time period.

In a possible implementation, the second similarity, the third distance value, and the fourth distance value satisfy the following relational expression: S2=T3/T4.

In a possible implementation, the second similarity is a second distance ratio, the second distance ratio reflects a ratio of a difference between an efficiency distance corresponding to a second moment in the first time period and a maximum value in an actual distance and a safety distance that correspond to the second moment in the first time period to a difference between the efficiency distance and the safety distance that correspond to the second moment.

In a possible implementation, the second distance ratio is less than or equal to a ratio of a difference between an efficiency distance corresponding to the any moment in the first time period and a maximum value in the actual distance and the safety distance that correspond to the any moment in the first time period to a difference between the corresponding efficiency distance and safety distance.

In a possible implementation, the efficiency factor is obtained by using at least the second similarity and at least one of the collision factor or a high-efficiency time proportion factor, where the collision factor indicates the case in which the collision occurs in the first time period, the high-efficiency time proportion factor indicates a ratio of total duration of one or more sub-periods in which an actual distance is less than a high-efficiency distance to the duration of the first time period, the high-efficiency distance in the first time period corresponds to the safety distance rule, and the high-efficiency distance is greater than the safety distance and less than the efficiency distance.

In a possible implementation, a value of the efficiency factor is equal to a product of the second similarity and the collision factor.

In a possible implementation, a value of the efficiency factor is equal to a product of the second similarity and the high-efficiency time proportion factor.

In a possible implementation, a value of the efficiency factor is equal to a product of the second similarity, the collision factor, and the high-efficiency time proportion factor.

In a possible implementation, the determining module is further configured to determine a comprehensive factor based on the safety factor and the efficiency factor, where the comprehensive factor is a product of the safety factor and the efficiency factor, or an average value of the safety factor and the efficiency factor, and the comprehensive factor is used to comprehensively evaluate safety and efficiency of the safety distance of the first device.

Optionally, this application further provides a safety factor obtaining system. The system may include the apparatus 1800 described above.

Further, this application further provides a terminal device. The terminal device includes the foregoing safety factor obtaining system. For example, the terminal device may be any transportation tool, for example, a vehicle, a ship, a flight vehicle, or another possible transportation tool. This is not limited in embodiments of this application.

FIG. 19 is a schematic diagram of an apparatus according to another embodiment of this application. An apparatus 1900 shown in FIG. 19 includes a memory 1901, a processor 1902, a communication interface 1903, and a bus 1904. The memory 1901, the processor 1902, and the communication interface 1903 are in communication connection with each other through the bus 1904.

The memory 1901 may be a read-only memory (read-only memory, ROM), a static storage device, a dynamic storage device, or a random access memory (random access memory, RAM). The memory 1901 may store a program. When the program stored in the memory 1901 is executed by the processor 1902, the processor 1902 is configured to perform the steps of the methods shown in FIG. 2 and FIG. 10.

The processor 1902 may be a general-purpose central processing unit (central processing unit, CPU), a microprocessor, an application-specific integrated circuit (application-specific integrated circuit, ASIC), or one or more integrated circuits. The processor 1902 is configured to execute a related program, to implement the methods in embodiments of this application.

Alternatively, the processor 1902 may be an integrated circuit chip, and has a signal processing capability. In an implementation process, the steps of the methods in embodiments of this application may be completed by using a hardware integrated logic circuit in the processor 1902 or instructions in a form of software.

The processor 1902 may be alternatively a general-purpose processor, a digital signal processor (digital signal processing, DSP), an application-specific integrated circuit (ASIC), a field programmable gate array (field programmable gate array, FPGA) or another programmable logic device, a discrete gate or a transistor logic device, or a discrete hardware component. The processor 1902 may implement or perform the methods, the steps, and logical block diagrams that are disclosed in embodiments of this application. The general-purpose processor may be a microprocessor, or the processor may be any conventional processor, or the like.

The steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 1901. The processor 1902 reads information in the memory 1901, and completes, in combination with hardware of the processor 1902, functions that need to be performed by units included in the apparatuses in this application. For example, the processor 1902 may perform the steps/functions in embodiments shown in FIG. 2 and FIG. 10.

The communication interface 1903 may use, but not limited to, a transceiver apparatus of a transceiver type, to implement communication between the apparatus 1900 and another device or a communication network.

The bus 1904 may include a path for transmitting information between components (for example, the memory 1901, the processor 1902, and the communication interface 1903) of the apparatus 1900.

It should be understood that the apparatus 1900 shown in an embodiment of this application may be an electronic device, or may be a chip configured in an electronic device.

It should be understood that, the processor in embodiments of this application may be a central processing unit (central processing unit, CPU), and the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, random access memories (random access memories, RAMs) in a plurality of forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium, or the like. The semiconductor medium may be a solid state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A safety factor obtaining method, comprising:

obtaining an actual distance between a first device and a first obstacle in a first time period; and determining a safety factor of the first device based on the actual distance in the first time period and a safety distance in the first time period, wherein the safety distance in the first time period corresponds to a preset safety distance rule, wherein

the safety factor is obtained by using at least a first similarity S1 between a first mapping relationship and a second mapping relationship, the first mapping relationship is a mapping relationship between the actual distance and time that are in the first time period, and the second mapping relationship is a mapping relationship between the safety distance and the time that are in the first time period.

2. The method according to claim 1, wherein the first similarity is obtained by using a first distance value T1 and a second distance value T2, the first distance value reflects a sum of a minimum value in an actual distance and a safety distance that correspond to at least one moment in the first time period, and the second distance value reflects a sum of the safety distance corresponding to the at least one moment in the first time period.

3. The method according to claim 2, wherein the first distance value reflects a sum of a minimum value in an actual distance and a safety distance that correspond to any moment in the first time period, and the second distance value reflects a sum of the safety distance corresponding to the any moment in the first time period.

4. The method according to claim 2 or 3, wherein the first similarity, the first distance value, and the second distance value satisfy the following relational expression: $S1 = T1/T2$.

5. The method according to claim 1, wherein the first similarity is a first distance ratio, and the first distance ratio reflects a ratio of a minimum value in an actual distance and a safety distance that correspond to a first moment in the first time period to the safety distance corresponding to the first moment.

6. The method according to claim 5, wherein the first distance ratio is less than or equal to a ratio of a minimum value in an actual distance and a safety distance that correspond to any moment in the first time period to the corresponding safety distance.

7. The method according to any one of claims 1 to 6, wherein the safety factor is obtained by using at least the first similarity and at least one of a collision factor or a safety time proportion factor, the collision factor indicates a case in which collision occurs in the first time period, the safety time proportion factor indicates a ratio of total duration of one or more sub-periods in which an actual distance is greater than a safety distance to duration of the first time period, and the first time period comprises at least one sub-period.

8. The method according to claim 7, wherein a value of the safety factor is equal to a product of the first similarity and the collision factor.

9. The method according to claim 7, wherein a value of the safety factor is equal to a product of the first similarity and the safety time proportion factor.

10. The method according to claim 7, wherein a value of the safety factor is equal to a product of the first similarity, the collision factor, and the safety time proportion factor.

11. The method according to any one of claims 1 to 10, wherein the method further comprises:

   determining an efficiency factor of the first device based on the actual distance in the first time period, the safety distance in the first time period, and an efficiency distance in the first time period, wherein the efficiency distance in the first time period corresponds to the preset safety distance rule, the efficiency distance is greater than the safety distance, and the efficiency distance indicates a distance between the first device and the first obstacle when traffic efficiency of the first device is satisfied, wherein
   the efficiency factor is obtained by using at least a second similarity S2 between the first mapping relationship, the second mapping relationship, and a third mapping relationship, and the third mapping relationship is a mapping relationship between the efficiency distance and the time that are in the first time period.

12. The method according to claim 11, wherein the second similarity is obtained by using a third distance value T3 and a fourth distance value T4, the third distance value reflects a sum of a difference between an efficiency distance corresponding to the at least one moment in the first time period and a maximum value in the actual distance and the safety distance that correspond to the at least one moment in the first time period, and the fourth distance value reflects a sum of a difference between the efficiency distance and the safety distance that correspond to the at least one moment in the first time period.

13. The method according to claim 12, wherein the third distance value reflects a sum of a difference between an efficiency distance corresponding to the any moment in the first time period and a maximum value in the actual distance and the safety distance that correspond to the any moment in the first time period, and the fourth distance value reflects a sum of a difference between the efficiency distance and the safety distance that correspond to the any moment in the first time period.

14. The method according to claim 12 or 13, wherein the second similarity, the third distance value, and the fourth distance value satisfy the following relational expression: S2=T3/T4.

15. The method according to claim 11, wherein the second similarity is a second distance ratio, the second distance ratio reflects a ratio of a difference between an efficiency distance corresponding to a second moment in the first time period and a maximum value in an actual distance and a safety distance that correspond to the second moment in the first time period to a difference between the efficiency distance and the safety distance that correspond to the second moment.

16. The method according to claim 15, wherein the second distance ratio is less than or equal to a ratio of a difference between an efficiency distance corresponding to the any moment in the first time period and a maximum value in the actual distance and the safety distance that correspond to the any moment in the first time period to a difference between the corresponding efficiency distance and safety distance.

17. The method according to any one of claims 11 to 16, wherein the efficiency factor is obtained by using at least the second similarity and at least one of the collision factor or a high-efficiency time proportion factor, wherein the collision factor indicates the case in which the collision occurs in the first time period, the high-efficiency time proportion factor indicates a ratio of total duration of one or more sub-periods in which an actual distance is less than a high-efficiency distance to the duration of the first time period, the high-efficiency distance in the first time period corresponds to the safety distance rule, and the high-efficiency distance is greater than the safety distance and less than the efficiency distance.

18. The method according to claim 17, wherein a value of the efficiency factor is equal to a product of the second similarity and the collision factor.

19. The method according to claim 17, wherein a value of the efficiency factor is equal to a product of the second similarity and the high-efficiency time proportion factor.

20. The method according to claim 17, wherein a value of the efficiency factor is equal to a product of the second similarity, the collision factor, and the high-efficiency time proportion factor.

21. The method according to any one of claims 11 to 20, wherein the method further comprises:
determining a comprehensive factor based on the safety factor and the efficiency factor, wherein the comprehensive factor is a product of the safety factor and the efficiency factor, or an average value of the safety factor and the efficiency factor, and the comprehensive factor is used to comprehensively evaluate safety and efficiency of the safety distance of the first device.

22. A safety factor obtaining apparatus, wherein the apparatus comprises a module configured to perform the method according to any one of claims 1 to 21.

23. A safety factor obtaining apparatus, wherein the apparatus comprises at least one processor and a memory, the processor is coupled to the memory, the memory stores program instructions, and when the program instructions stored in the memory are executed by the processor, the apparatus is enabled to perform the method according to any one of claims 1 to 21.

24. A safety factor obtaining system, wherein the system comprises the apparatus according to claim 22 or 23.

25. A terminal device, wherein the terminal device comprises the apparatus according to claim 22, the apparatus according to claim 23, or the system according to claim 24.

26. A computer-readable storage medium, wherein the computer-readable storage medium is configured to store program instructions executed by a computer, and the program instructions comprise instructions used to perform the method according to any one of claims 1 to 21.

27. A computer program product, wherein the computer program product comprises computer program instructions, and when the computer program instructions are run on a computer, the computer is enabled to implement the method according to any one of claims 1 to 21.

FIG. 1

S201: Obtain an actual distance between a first device and a first obstacle in a first time period

S202: Determine a safety factor of the first device based on the actual distance in the first time period and a safety distance in the first time period, where the safety factor is obtained by using at least a first similarity S1 between a first mapping relationship and a second mapping relationship, the first mapping relationship is a mapping relationship between the actual distance and time that are in the first time period, and the second mapping relationship is a mapping relationship between the safety distance and the time that are in the first time period

FIG. 2

Safety distance

Actual distance

FIG. 3

Safety distance

FIG. 4

FIG. 5

FIG. 6

FIG. 7

FIG. 8

FIG. 9

S1001: Determine an efficiency factor of a first device based on an actual distance, a safety distance, and an efficiency distance that are in a first time period, where the efficiency factor is obtained by using at least a second similarity S2 between a first mapping relationship, a second mapping relationship, and a third mapping relationship, and the third mapping relationship is a mapping relationship between the efficiency distance and time that are in the first time period

FIG. 10

Efficiency distance

Safety distance

Actual distance

FIG. 11

Distance

Efficiency distance — f3

Actual distance
Safety distance — f2

f1

t0    t1    t2    t3  t4    Time

FIG. 12

FIG. 13

FIG. 14

FIG. 15

FIG. 16

FIG. 17

FIG. 18

FIG. 19

## INTERNATIONAL SEARCH REPORT

International application No.

**PCT/CN2022/129922**

### A. CLASSIFICATION OF SUBJECT MATTER

G05D1/02(2020.01)i;B60W30/09(2012.01)i

According to International Patent Classification (IPC) or to both national classification and IPC

### B. FIELDS SEARCHED

Minimum documentation searched (classification system followed by classification symbols)

Documentation searched other than minimum documentation to the extent that such documents are included in the fields searched

Electronic data base consulted during the international search (name of data base and, where practicable, search terms used)

CNTXT; CNABS; ENTXTC; CNKI; VEN: 车, 距离, 车距, 障碍, 安全距离, 安全系数, 安全因子, 安全, 参数, 积分, 距离, 时间, 相似, 效率, 效率距离, 效率因子, 障碍, car, vehicle, distance, distant, safe, safety, parameter, obstacle, coefficient, ratio, factor, integral, time, similar+, efficien+

### C. DOCUMENTS CONSIDERED TO BE RELEVANT

| Category* | Citation of document, with indication, where appropriate, of the relevant passages | Relevant to claim No. |
|---|---|---|
| X | CN 111667719 A (WENYUAN ZHIXING LTD.) 15 September 2020 (2020-09-15) description, paragraphs 0017-0055, and figures 1-7 | 1-6, 22-27 |
| X | CN 111506087 A (ANHUI JIANGHUAI AUTOMOBILE GROUP CO., LTD.) 07 August 2020 (2020-08-07) description, paragraphs 0053-0144, and figures 1-5 | 1-6, 22-27 |
| A | US 2020057896 A1 (INTEL CORP.) 20 February 2020 (2020-02-20) entire document | 1-27 |
| A | US 2020272156 A1 (BAIDU ONLINE NETWORK TECHNOLOGY BEIJING CO., LTD.) 27 August 2020 (2020-08-27) entire document | 1-27 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 February 2023** | **08 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| | | | International application No. |
|---|---|---|---|
| | | | **PCT/CN2022/129922** |

| Patent document cited in search report | | | Publication date (day/month/year) | Patent family member(s) | | | Publication date (day/month/year) |
|---|---|---|---|---|---|---|---|
| CN | 111667719 | A | 15 September 2020 | None | | | |
| CN | 111506087 | A | 07 August 2020 | None | | | |
| US | 2020057896 | A1 | 20 February 2020 | DE | 102020119870 | A1 | 01 April 2021 |
| | | | | DE | 102020119870 | A9 | 08 July 2021 |
| US | 2020272156 | A1 | 27 August 2020 | EP | 3699046 | A1 | 26 August 2020 |
| | | | | KR | 20200103550 | A | 02 September 2020 |
| | | | | KR | 102332045 | B1 | 29 November 2021 |
| | | | | US | 11415993 | B2 | 16 August 2022 |
| | | | | JP | 2020132155 | A | 31 August 2020 |
| | | | | JP | 7000637 | B2 | 19 January 2022 |

Form PCT/ISA/210 (patent family annex) (July 2022)

**REFERENCES CITED IN THE DESCRIPTION**

**Patent documents cited in the description**

- CN 202111319474